# FASCICULE DE BREVET EUROPEEN

(11) **EP 1 508 260 B1**
(45) Date de publication et mention de la délivrance du brevet: **17.01.2007**
(21) Numéro de dépôt: 03755178.5
(22) Date de dépôt: 21.05.2003
(51) Int. Cl.: H05B 6/40, C21D 1/10, C21D 9/32, H05B 6/06

(54) **DISPOSITIF DE CHAUFFAGE PAR INDUCTION D UNE DENTURE D U NE PIECE MECANIQUE**
EINRICHTUNG ZUR INDUKTIONSERWÄRMUNG VON ZU EINEM MECHANISCHEN TEIL GEHÖRENDEN ZÄHNEN
DEVICE FOR THE INDUCTION HEATING OF TOOTHING BELONGING TO A MECHANICAL PART

(30) Priorité: 24.05.2002 FR 0206366
(43) Date de publication de la demande: 23.02.2005
(73) Titulaire: EFD Induction SA, 38170 Seyssinet Pariset (FR); Peugeot Citroen Automobiles SA, 78140 Vélizy-Villacoublay (FR)
(72) Inventeur: RIVAT, Pascal, F-38590 Saint Etienne de Saint Geoirs (FR); GRUNEWALD, Jean, F-25700 Valentigney (FR)
(74) Mandataire: de Beaumont, Michel
(86) Numéro de dépôt international: PCT/FR2003/001540
(87) Numéro de publication internationale: WO 2003/101152

(56) Documents cités:
- DE-C- 3 909 117
- FR-A- 2 746 574
- GB-A- 1 111 035
- US-A- 4 855 551
- US-A- 4 855 556

## Description

La présente invention concerne un dispositif de chauffage par induction d'une denture d'une pièce mécanique.

On souhaite réaliser un traitement de surface de certaines pièces mécaniques pour obtenir des zones durcies en surface des pièces mécaniques, ce qui permet d'en améliorer les propriétés mécaniques. L'utilisation de dispositifs de chauffage par induction a connu un essor important dans le cadre de tels traitements de surface de pièces mécaniques.

En effet, les dispositifs de chauffage par induction présente de nombreux avantages par rapport à des dispositifs de chauffage classiques, tels que des fours, pour réaliser un traitement de surface.

Par exemple, le chauffage par induction peut être limité à une zone localisée de la pièce à traiter représentant quelques pourcents de l'ensemble de la pièce. Ceci permet de réaliser des économies d'énergie importantes par rapport à des fours classiques. En outre, les dispositifs de chauffage par induction peuvent généralement être directement intégrés à une chaîne de fabrication. De plus, les dispositifs de chauffage par induction peuvent être mis en marche ou à l'arrêt quasiment de façon instantanée, ce qui permet de réduire, voire de supprimer, les stocks de pièces à traiter. Enfin, les dispositifs de chauffage par induction ont généralement un coût beaucoup plus faible que des fours classiques, et ne sont pas polluants.

Dans de nombreux cas, il a été possible de substituer aux dispositifs de chauffage classiques des dispositifs de chauffage par induction.

Toutefois, dans le cas de pièces mécaniques de formes géométriques complexes, la mise en oeuvre d'un traitement thermique par induction peut s'avérer délicate.

Par exemple, dans le cas d'une roue dentée comportant une denture sur une paroi périphérique, on souhaite obtenir une zone durcie d'épaisseur faible et régulière sur toute la surface de la denture. Pour réaliser de telles zones par un traitement par induction, on dispose généralement une spire d'induction au voisinage de la paroi périphérique de la roue dentée comportant la denture.

Toutefois, avec un tel dispositif, l'épaisseur de la zone chauffée obtenue, c'est-à-dire de la zone durcie, n'est généralement pas homogène, en particulier pour une roue dentée hélicoïdale pour laquelle les dents sont inclinées par rapport à l'axe de la roue. Plus précisément, la zone durcie est sensiblement homogène sur les deux faces de chaque dent au niveau du plan médian de la roue mais ne l'est pas au niveau des extrémités axiales de chaque dent. En effet, on obtient, au niveau des extrémités axiales de chaque dent, une zone durcie de grande épaisseur, correspondant à une zone surchauffée, sur une face de la dent et une zone durcie de faible épaisseur, ou une absence de zone durcie, correspondant à une zone insuffisamment chauffée, sur l'autre face de la dent.

Ce phénomène a pour origine la dissymétrie de la roue dentée due à l'inclinaison des dents. En effet, les courants induits qui se développent dans la roue dentée tendent à se répartir de façon non uniforme si bien que certaines parties des dents sont plus ou moins chauffées que d'autres. La transformation des zones insuffisamment chauffées tend à être incomplète et les zones surchauffées tendent à se déformer de façon excessive et requérir une étape de rectification ultérieure. Ceci limite l'utilisation des dispositifs de chauffage par induction classiques pour le traitement de surface de dentures de roues dentées.

Le document FR 2 746 574 décrit un dispositif de chauffage par induction pour le traitement de surface homogène de dentures hélicoïdales. Toutefois, un tel dispositif a une structure relativement complexe et est peu adapté à une application industrielle. Le document US 4 855 556 décrit un dispositif de chauffage par induction pour le traitement de dentures.

La présente invention vise également à obtenir un dispositif de chauffage par induction pour le traitement de surface d'une denture d'une pièce mécanique qui soit de conception simple pour une utilisation à une échelle industrielle.

Pour atteindre cet objet, la présente invention prévoit un dispositif de chauffage par induction de la denture d'une roue dentée, la denture étant située au moins sur une paroi de la roue dentée, comprenant une spire d'induction principale annulaire connectée à une source d'alimentation et disposée de façon coaxiale à la roue dentée en vis-à-vis de la paroi périphérique ; et des première et seconde spires d'induction auxiliaires annulaires, connectées électriquement à la source d'alimentation en parallèle à la spire principale, et disposée de façon coaxiale à la spire principale de part et d'autre de la spire principale à distance de la denture.

Selon un mode de réalisation de l'invention, le dispositif comprend un moyen de réglage d'une première distance déterminée, selon l'axe de la roue dentée, entre la première spire d'induction auxiliaire et la spire d'induction principale.

Selon un mode de réalisation de l'invention, le dispositif comprend un moyen de réglage d'une seconde distance, selon l'axe de la roue dentée, entre la seconde spire d'induction auxiliaire et la spire d'induction principale.

Selon un mode de réalisation de l'invention, le diamètre de la première spire d'induction auxiliaire est différent du diamètre de la seconde spire d'induction auxiliaire.

Selon un mode de réalisation de l'invention, le diamètre de la première spire d'induction auxiliaire et/ou le diamètre de la seconde spire d'induction auxiliaire sont différents du diamètre de la spire principale.

Selon un mode de réalisation de l'invention, les première et seconde spires d'induction auxiliaires s'étendent chacune à travers un élément concentrateur du champ magnétique induit par lesdites spires.

Selon un mode de réalisation de l'invention, le dispositif comporte au moins une spire d'induction annulaire supplémentaire connectée à la source d'alimentation en parallèle à la spire principale, et disposée de façon coaxiale à la spire principale du côté de la première spire d'induction auxiliaire, ou de la seconde spire d'induction auxiliaire, opposé à la spire principale.

Selon un mode de réalisation de l'invention, la section droite de la première spire d'induction auxiliaire est différente de la section droite de la seconde spire d'induction auxiliaire.

Selon un mode de réalisation de l'invention, la section droite de la première spire d'induction auxiliaire et/ou la section droite de la seconde spire d'induction auxiliaire sont différentes de la section droite de la spire principale.

Selon un mode de réalisation de l'invention, la roue dentée comporte un alésage intérieur définissant une paroi périphérique intérieure sur laquelle est réalisée une denture hélicoïdale, la spire d'induction principale étant située dans ledit alésage intérieur.

Cet objet, ces caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente une vue en perspective d'une roue dentée à denture hélicoïdale et d'un exemple de réalisation d'un dispositif de chauffage par induction selon l'invention ;
la figure 2 représente une vue de côté de la roue dentée et du dispositif de la figure 1 ;
la figure 3 représente une section de la roue dentée et d'une partie du dispositif de la figure 1 selon un plan contenant l'axe de la roue dentée ;
la figure 4 représente une coupe d'une roue dentée et d'une variante de réalisation du dispositif selon l'invention ; et
la figure 5 représente une section d'une roue dentée et d'une autre variante de réalisation du dispositif selon l'invention.

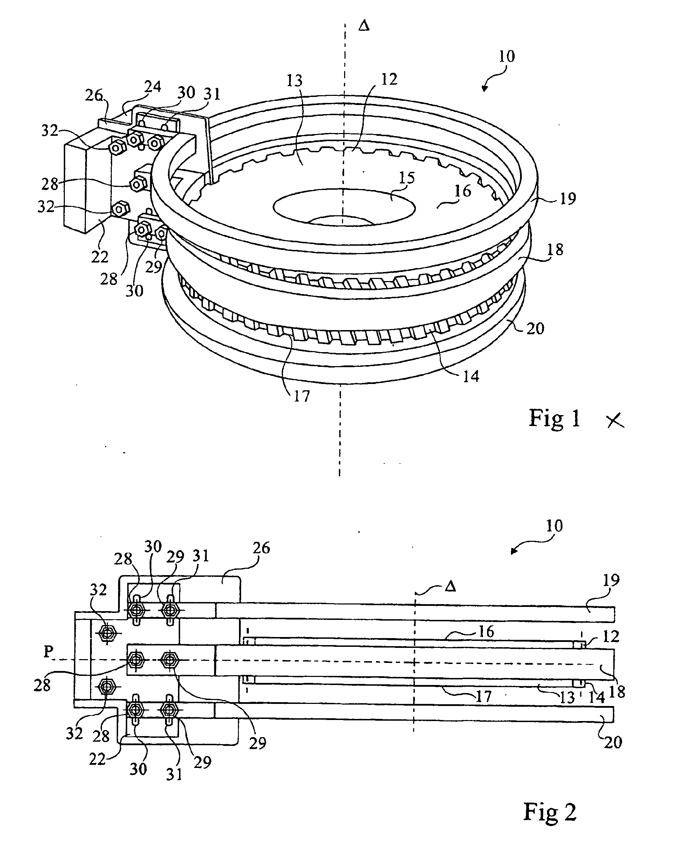

Les figures 1 et 2 représentent respectivement une vue en perspective et une vue de côté d'un dispositif de chauffage par induction 10 selon l'invention utilisé pour réaliser le chauffage en surface d'une denture 12 d'une roue dentée 13 d'axe Δ et de plan médian P. Dans le présent exemple, la roue dentée 13 comporte des parois périphériques extérieure 14 et intérieure 15 et deux faces latérales 16, 17. La denture 12 est disposée sur la paroi périphérique extérieure 14 de la roue dentée 13.

Le dispositif 10 comprend une spire annulaire principale 18 constituée d'un tube creux annulaire. La spire principale 18 est disposée de façon coaxiale à la roue dentée 13, en vis-à-vis de la denture 12, de sorte que le plan médian P forme un plan de symétrie de la spire 18. Un support, non représenté, maintient la roue dentée 13 en position.

Le dispositif 10 comprend des première 19 et seconde 20 spires annulaires auxiliaires, constituées chacune d'un tube annulaire creux. Les spires auxiliaires 19, 20 sont disposées de façon coaxiale à la roue dentée 13 de part et d'autre de la spire principale 18, et ne sont pas directement en vis-à-vis de la denture 12.

Les trois spires 18, 19, 20 sont fixées à une première extrémité à une première semelle métallique 22. Les secondes extrémités des trois spires 18, 19, 20 sont fixées à une seconde semelle métallique 24. Les deux semelles métalliques 22, 24 sont connectées aux bornes d'un générateur basse fréquence ou haute fréquence (non représenté). Une paroi isolante 26 sépare les deux semelles 22, 24. Les extrémités de chaque spire 18, 19, 20 sont maintenues sur les semelles 22, 24 correspondantes par deux boulons 28, 29 en matériau isolant qui relient les deux extrémités de chaque spire 18, 19, 20 au travers des semelles 22, 24 et de la paroi isolante 26. Des lumières 30, 31 traversant les semelles 22, 24 et la paroi isolante 26 permettent d'ajuster les positions selon l'axe Δ des boulons 28, 29 des spires auxiliaires 19, 20. Deux boulons 32 maintiennent les semelles métalliques 22, 24 contre la paroi isolante 26. Les trois spires 18, 19, 20 sont ainsi montées en parallèle sur le générateur de fréquence.

Un fluide de refroidissement circule à l'intérieur de chaque spire 18, 19, 20. Les moyens d'apport, d'évacuation et de mise en circulation du fluide de refroidissement pour chacune des spires 18, 19, 20 ne sont pas représentés sur les différentes figures.

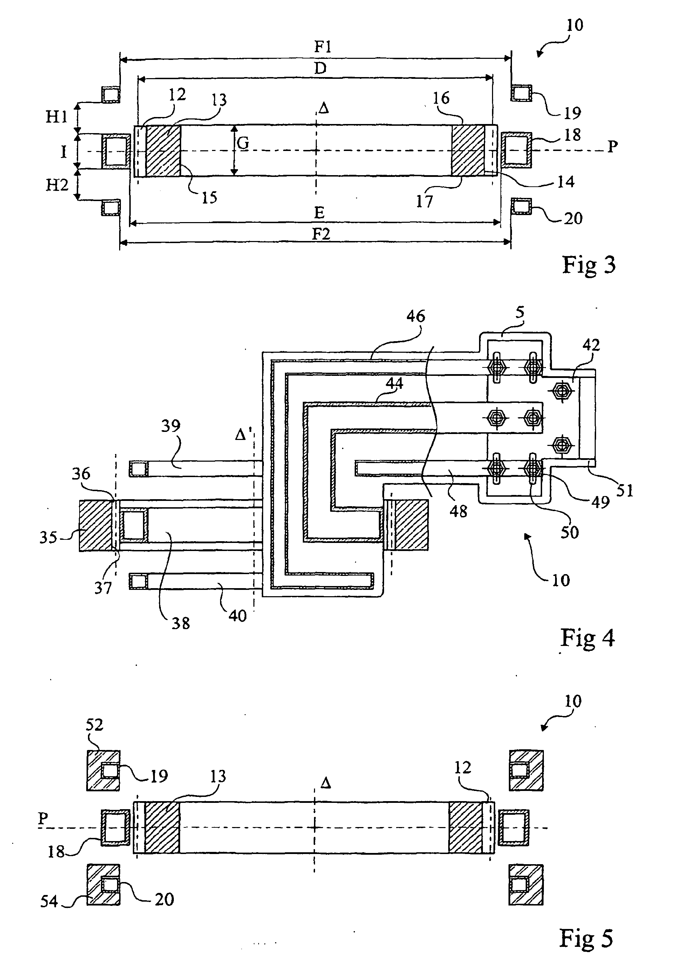

La figure 3 représente une section de la roue dentée 13 et des spires 18, 19, 20 du dispositif 10 selon un plan contenant l'axe Δ, et met en évidence les principaux paramètres géométriques permettant de définir la structure du dispositif 10. Ces paramètres sont :
- le diamètre intérieur E de la spire principale 18 ;
- le diamètre intérieur F1 de la première spire auxiliaire 19 ;
- le diamètre intérieur F2 de la seconde spire auxiliaire 20 ;
- la hauteur I selon l'axe Δ de la spire principale 18 ;
- la distance H1 selon l'axe Δ séparant la première spire auxiliaire 19 de la spire principale 18 ;
- la distance H2 selon l'axe Δ séparant la seconde spire auxiliaire 20 de la spire principale 18 ; et
- les sections droites de chaque spire 18, 19, 20.

Le diamètre E est défini par rapport au diamètre D de la roue dentée 13 et la hauteur I est définie par rapport à la hauteur G selon l'axe Δ de la roue dentée 13. Dans l'exemple de réalisation de la figure 3, la spire principale 18 est de section droite rectangulaire, la hauteur I de la spire 18 étant inférieure à la hauteur G de la roue dentée 13, et les spires auxiliaires 19, 20 sont de section droite carrée.

Un exemple de traitement thermique classique consiste à réaliser une préchauffe de la denture 12 à moyenne ou basse fréquence, puis une chauffe de forte puissance à haute fréquence pendant une très faible durée, et enfin un refroidissement rapide à température ambiante. On forme ainsi une zone durcie en surface de la denture 12. Un autre exemple de traitement thermique consiste à réaliser une première zone durcie comme cela a été expliqué précédemment, puis éventuellement à réaliser un chauffage à basse température permettant de faire un revenu de la zone trempée sans refroidissement forcé. On forme ensuite une seconde zone durcie, en réalisant une préchauffe à moyenne ou basse fréquence, puis une chauffe de forte puissance à haute fréquence de la denture 12 pendant une très faible durée, et enfin un refroidissement rapide à température ambiante. Suivant le traitement thermique à réaliser, les spires peuvent être connectées au générateur de sorte que le courant circule à un instant donné dans le même sens dans les trois spires, ou bien en sens inverse dans l'une des spires.

On peut prévoir une ou plusieurs entretoises directement fixées sur les spires 18, 19, 20 pour assurer le maintien des distances H1 et H2 entre les spires auxiliaires 19, 20 et la spire principale 18 lors d'une opération de chauffage.

Par de nombreux essais, la demanderesse a mis en évidence que l'ajout de première et seconde spires auxiliaires 19, 20 permet d'assurer une meilleure répartition des courants induits dans la roue dentée 13. On obtient ainsi un chauffage en surface plus homogène de la denture 12 au voisinage des faces latérales 16, 17. En particulier, on supprime les zones insuffisamment chauffées sur les faces d'une dent au voisinage des faces latérales 16, 17. Bien que la structure du dispositif 10 de chauffage selon l'invention soit particulièrement simple, la demanderesse a mis en évidence une amélioration importante de l'uniformité des zones durcies obtenues par rapport à des dispositifs classiques à spire unique. En effet, en utilisant le dispositif 10 selon l'invention, on atteint une épaisseur de zones durcies sensiblement uniforme sur au moins 95 % de la hauteur de la denture 12 dans la direction de l'hélice.

A titre d'exemple, pour une roue dentée ayant 79 dents sur la paroi périphérique extérieure 14, un diamètre D de 175 mm, et un module de l'ordre de 2, on obtient un traitement de surface convenable en disposant des spires auxiliaires 19, 20, ayant des diamètres intérieurs F1, F2 de 190 mm, à des distances H1, H2 de 10 mm d'une spire principale 18 ayant un diamètre intérieur E de 180 mm. La spire principale 18 a une section droite rectangulaire ayant une hauteur I de 20 mm, et une largeur radiale de 10 mm, et les spires auxiliaires 19, 20 ont une section droite carré de 10 mm de côté.

Les diamètres intérieurs F1, F2 et les distances H1, H2 sont déterminés en fonction de la forme géométrique de la roue dentée 13. Par exemple, la roue dentée 13 peut comporter une protubérance sur l'une des faces latérales 16, 17. Dans ce cas, les distances H1 et H2 peuvent être différentes. De même, les diamètres F1 et F2 peuvent être différents entre eux, et différents du diamètre E de la spire principale 18. Le réglage des distances H1 et H2 peut être obtenu au moyen des lumières (30, 31). Enfin, les sections droites des spires 18, 19, 20 peuvent être différentes de sections carrées ou rectangulaires. Par exemple, les spires auxiliaires 19, 20 peuvent être de section triangulaire. Selon les sections droites et les épaisseurs des tubes creux constituant les spires, celles-ci peuvent être fabriquées par formage ou usinage.

Selon une variante de l'invention, le dispositif 10 comprend des spires annulaires auxiliaires supplémentaires en plus des première et seconde spires auxiliaires 19, 20. De telles spires supplémentaires sont disposées de façon coaxiale à la roue dentée 13 de part et d'autre des spires auxiliaires 19, 20. Le nombre de spires auxiliaires ajoutées peut être différent d'un côté ou de l'autre de la spire principale 18.

La figure 4 représente un exemple de réalisation du dispositif pour une roue dentée 35 d'axe Δ' comportant une denture 36 sur sa paroi périphérique interne 37. Dans ce mode de réalisation, le dispositif de chauffage par induction 10 comprend une spire annulaire principale 38 disposée à l'intérieur de la roue dentée 35 de façon coaxiale à la roue dentée 35 en vis-à-vis de la denture 36. Le dispositif 10 comprend également deux spires annulaires auxiliaires 39, 40 disposées de façon coaxiale à la roue dentée 35 de part et d'autre de la spire principale 38. Chaque spire 38, 39, 40 est reliée, à une extrémité, à une première semelle 42 par un bras de liaison 44, 46, 48 et, à l'extrémité opposée, à une deuxième semelle par un autre bras de liaison. Les liaisons sont réalisées, par exemple, au moyen de boulons 49. Des lumières 50 associées aux boulons 49 des spires auxiliaires 39, 40 permettent d'en régler les positions respectives selon l'axe Δ'. Les deux semelles 42 sont séparées par une paroi isolante 51. Les semelles 42 sont reliées à un générateur à basse fréquence ou à haute fréquence.

Dans cette variante de réalisation, les paramètres géométriques principaux définissant le dispositif 10 sont, par analogie avec le mode de réalisation précédemment décrit, le diamètre extérieur de la spire principale 38, les diamètres extérieurs des spires auxiliaires 39, 40, les distances selon l'axe Δ' entre les spires auxiliaires 39, 40 et la spire principale 38, et les sections droites des spires 38, 39, 40.

La figure 5 représente une section d'une autre variante de réalisation du dispositif de chauffage par induction 10 selon l'invention dans lequel chaque spire auxiliaire 19, 20 s'étend dans un élément 52, 54 de concentration du champ magnétique induit par la spire 19, 20. L'élément 52, 54 peut être constitué d'un matériau de haute perméabilité magnétique.

La présente invention permet de réaliser un traitement thermique en surface de la denture d'une roue dentée qui assure un chauffage homogène de la denture. Les propriétés mécaniques de la roue dentée sont ainsi améliorées, et sont sensiblement homogènes sur toute la surface de la denture. De plus, en réduisant les déformations excessives de la denture, on limite les opérations de rectification. En outre, le dispositif selon l'invention a une structure relativement simple et peut facilement être intégré à une ligne de fabrication.

Bien entendu, la présente invention est susceptible de diverses variantes et modifications qui apparaîtront à l'homme de l'art dans la limite de la portée des revendications ci-après. En particulier, le dispositif selon l'invention peut être utilisé pour réaliser un chauffage par induction de roues dentées à chevrons, de roues d'engrenage à vis sans fin tangentes ou globiques. La présente invention s'applique également aux roues dentées coniques, et aux roues dentées pour lesquelles la denture est située sur une face sensiblement perpendiculaire à l'axe de la roue, les paramètres géométriques définissant le dispositif selon l'invention étant déterminés selon la denture traitée.

## Revendications

1. Dispositif (10) de chauffage par induction de la denture (12, 36) d'une roue dentée (13, 35), la denture étant située au moins sur une paroi périphérique (14, 37) de la roue dentée, comprenant :
- une spire d'induction principale annulaire (18, 38) connectée à une source d'alimentation et disposée de façon coaxiale à la roue dentée ; et
- des première (19, 39) et seconde (20, 40) spires d'induction auxiliaires annulaires disposées de façon coaxiale à la spire principale,
**caractérisé en ce que** la spire d'induction principale est disposée en vis-à-vis de la paroi périphérique et **en ce que** les première et seconde spires d'induction annulaires sont connectées électriquement à la source d'alimentation en parallèle à la spire principale et sont disposées de part et d'autre de la spire principale à distance de la denture.

2. Dispositif selon la revendication 1, comprenant un moyen de réglage (30, 31, 50) d'une première distance (H1) déterminée, selon l'axe (Δ, Δ') de la roue dentée (13, 35), entre la première (19, 39) spire d'induction auxiliaire et la spire d'induction principale (18, 38).

3. Dispositif selon la revendication 1, comprenant un moyen de réglage (30, 31, 50) d'une seconde distance (H2), selon l'axe (Δ, Δ') de la roue dentée (13, 35), entre la seconde (20, 40) spire d'induction auxiliaire et la spire d'induction principale (18, 38).

4. Dispositif selon la revendication 1, dans lequel le diamètre (F1) de la première (19, 39) spire d'induction auxiliaire est différent du diamètre (F2) de la seconde (20, 40) spire d'induction auxiliaire.

5. Dispositif selon la revendication 1, dans lequel le diamètre (F1) de la première (19, 39) spire d'induction auxiliaire et/ou le diamètre (F2) de la seconde (20, 40) spire d'induction auxiliaire sont différents du diamètre de la spire principale (18, 38).

6. Dispositif selon la revendication 1, dans lequel les première (19) et seconde (20) spires d'induction auxiliaires s'étendent chacune à travers un élément concentrateur du champ magnétique (52, 54) induit par lesdites spires.

7. Dispositif selon la revendication 1, comportant au moins une spire d'induction annulaire supplémentaire connectée à la source d'alimentation en parallèle à la spire principale (18, 38), et disposée de façon coaxiale à la spire principale du côté de la première spire d'induction auxiliaire (19, 39), ou de la seconde spire d'induction auxiliaire (20, 40), opposé à la spire principale.

8. Dispositif selon la revendication 1, dans lequel la section droite de la première (19, 39) spire d'induction auxiliaire est différente de la section droite de la seconde (20, 40) spire d'induction auxiliaire.

9. Dispositif selon la revendication 1, dans lequel la section droite de la première (19, 39) spire d'induction auxiliaire et/ou la section droite de la seconde (20, 40) spire d'induction auxiliaire sont différentes de la section droite de la spire principale (18, 38).

## Claims

1. A device (10) for heating by induction the teeth (12, 36) of a toothed wheel (13, 35), the teeth being located at least on a peripheral wall (14, 37) of the toothed wheel, comprising:
- a main ring-shaped induction spiral (18, 38) connected to a supply source and arranged coaxially to the toothed wheel; and
- first (19, 39) and second (20, 40) ring-shaped auxiliary induction spirals, arranged coaxially to the main spiral,
**characterized in that** the main induction spiral is arranged opposite to the peripheral wall and **in that** the first and second ring-shaped induction spirals are electrically connected to the power supply source in parallel to the main spiral and are arranged on either side of the main spiral at a distance from the teeth.

2. The device of claim 1, comprising means (30, 31, 50) for setting a first determined distance (H1), along the axis (Δ, Δ') of the toothed wheel (13, 35), between the first (19, 39) auxiliary induction spiral and the main induction spiral (18, 38).

3. The device of claim 1, comprising means (30, 31, 50) for setting a second distance (H2), along the axis (Δ, Δ') of the toothed wheel (13, 35), between the second (20, 40) auxiliary induction spiral and the main induction spiral (18, 38).

4. The device of claim 1, wherein the diameter (F1) of the first (19, 39) auxiliary induction spiral is different from the diameter (F2) of the second (20, 40) auxiliary induction spiral.

5. The device of claim 1, wherein the diameter (F1) of the first (19, 39) auxiliary induction spiral and/or the diameter (F2) of the second (20, 40) auxiliary induction spiral are different from the diameter of the main spiral (18, 38).

6. The device of claim 1, wherein the first (19) and second (20) auxiliary induction spirals each extend through an element for concentrating the magnetic field (52, 54) induced by said spirals.

7. The device of claim 1, comprising at least one additional ring-shaped induction spiral connected to the power supply source in parallel with the main spiral (18, 38), and arranged coaxially to the main spiral on the side of the first auxiliary induction spiral (19, 39), or of the second auxiliary induction spiral (20, 40), opposite to the main spiral.

8. The device of claim 1, wherein the cross-section of the first (19, 39) auxiliary induction spiral is different from the cross-section of the second (20, 40) auxiliary induction spiral.

9. The device of claim 1, wherein the cross-section of the first (19, 39) auxiliary induction spiral and/or the cross-section of the second (20, 40) auxiliary induction spiral are different from the cross-section of the main spiral (18, 38).

## Patentansprüche

1. Vorrichtung (10) zur Induktionsheizung der Verzahnung (12, 36) eines Zahnrads (13, 35), wobei die Verzahnung wenigstens auf einer Umfangswandung (14, 37) des Zahnrads angeordnet ist, die Vorrichtung umfassend:
- eine ringförmige Haupt- Induktionswindung (18, 38), die mit einer Stromversorgung verbunden und koaxial bezüglich dem Zahnrad angeordnet ist; sowie
- koaxial bezüglich der Hauptwindung angeordnete erste (19, 39) und zweite (20, 40) ringförmige Hilfs- Induktionswindungen,
**dadurch gekennzeichnet, dass** die Haupt-Induktionswindung in gegenüber stehender Ausrichtung mit der Umfangswandung angeordnet ist, und dass die erste und zweite ringförmige Induktionswindung elektrisch mit der Stromversorgung in Parallelschaltung bezüglich der Hauptwindung verbunden und zu beiden Seiten der Hauptwindung in Abstand von der Verzahnung angeordnet sind.

2. Vorrichtung nach Anspruch 1, welche ein Mittel (30, 31, 50) zur Einstellung eines bestimmten ersten Abstands (H1), in Richtung längs der Achse (Δ, Δ') des Zahnrads (13, 35), zwischen der ersten Hills-Induktionswindung (19, 39) und der Haupt-Induktionswindung (18, 38) umfaßt

3. Vorrichtung nach Anspruch 1, welche ein Mittel (30, 31, 50) zur Einstellung eines bestimmten zweiten Abstands (H2), in Richtung längs der Achse (Δ, Δ') des Zahnrads (13, 35), zwischen der zweiten Hilfs-Induktionswindung (20, 40) und der Haupt-Induktionswindung (18, 38) umfaßt

4. Vorrichtung nach Anspruch 1, bei welcher der Durchmesser (F1) der ersten Hilfs-Induktionswindung (19, 39) verschieden vom Durchmesser (F2) der zweiten Hilfs-Induktionswindung (20, 40) ist.

5. Vorrichtung nach Anspruch 1, bei welcher der Durchmesser (F1) der ersten Hilfs-Induktionswindung (19, 39) und/oder der Durchmesser (F2) der zweiten Hilfs-Induktionswindung (20, 40) verschieden vom Durchmesser der Haupt-Induktionswindung (18, 38) sind/ist

6. Vorrichtung nach Anspruch 1, bei welcher die erste (19) und die zweite (20) Hilfs-Induktionswindung jede sich jeweils durch ein Element (52, 54) zur Konzentration des durch die genannten Windungen erzeugten Magnetfelds hindurch erstrecken

7. Vorrichtung nach Anspruch 1, umfassend wenigstens eine zusätzliche ringförmige Induktionswindung, die mit der Stromversorgung in Parallelschaltung bezüglich der Haupt-Induktionswindung (18, 38) verbunden und koaxial zur Haupt-Windung auf der Seite der ersten Hilfs-Induktionswindung (19, 39) oder der zweiten Hilfs-Induktianswindung (20, 40), gegenüberliegend zur Hauptwindung, angeordnet ist.

8. Vorrichtung nach Anspruch 1, bei welcher der Querschnitt der ersten Hilfs-Induktionswindung (19, 39) verschieden von dem Querschnitt der zweiten Hilfs-Induktionswindung (20, 40) ist

9. Vorrichtung nach Anspruch 1, bei welcher der Querschnitt der ersten Hilfs-Induktionswindung (19, 39) und/oder der Querschnitt der zweiten Hilfs-Induktionswindung (20, 40) verschieden von dem Querschnitt der Hauptwindung (18, 38) sind/ist.
